(19) Europäisches Patentamt
European Patent Office
Office européen des brevets

(11) **EP 2 442 137 B1**

(12) **FASCICULE DE BREVET EUROPEEN**

(45) Date de publication et mention
de la délivrance du brevet:
**23.11.2016  Bulletin 2016/47**

(51) Int Cl.:
**G01S 19/08** (2010.01)    **G01S 19/07** (2010.01)

(21) Numéro de dépôt: **11184452.8**

(22) Date de dépôt: **10.10.2011**

(54) **Système d'augmentation de la disponibilité et des performances d'un système de géolocalisation par satellite**

System zur Erhöhung der Verfügbarkeit und der Leistungen eines Geolokalisierungssystems über Satellit

System for increasing the availability and performance of a satellite geopositioning system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.10.2010  FR 1004030**

(43) Date de publication de la demande:
**18.04.2012  Bulletin 2012/16**

(73) Titulaire: **Thales**
**92400 Courbevoie (FR)**

(72) Inventeurs:
- **Calmettes, Thibaud**
**31400 Toulouse (FR)**
- **Monnerat, Michel**
**31240 Saint Jean (FR)**
- **Kubrak, Damien**
**31400 Toulouse (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A1- 2004 088 111    US-A1- 2010 145 616**
**US-A1- 2010 164 800**

- **MARTIN J R ET AL: "Galileo Orbitography and Synchronization Processing Facility (OSPF): Preliminary design", ION GNSS 19TH INTERNATIONAL TECHNICAL MEETING OF THE SATELLITE DIVISION, 26-29 SEPTEMBER 2006, FORTH WORTH,TX, US, 26 septembre 2006 (2006-09-26), pages 1-10, XP002557650,**

**Description**

La présente invention a pour objet un système d'augmentation de la disponibilité et des performances d'un système de géolocalisation par satellite.

Elle concerne le domaine des systèmes de géolocalisation et de positionnement par satellite, connus également sous l'abréviation anglo-saxonne GNSS (« Global Navigation Satellite System »), par exemple les systèmes GPS ou GALILEO, et plus précisément des méthodes d'augmentation et/ou d'assistance pour de tels systèmes.

L'augmentation des systèmes GNSS désigne une méthode permettant d'améliorer la fiabilité de tels systèmes, en particulier leur disponibilité, leur précision et leur intégrité. Une telle méthode est basée sur l'intégration, dans le calcul du positionnement, d'informations externes portant sur différents types d'erreurs qui peuvent impacter le signal GNSS. Ces erreurs portent, par exemple, sur une désynchronisation des horloges du satellite et du récepteur, sur les informations de position des satellites fournies par leurs éphémérides ou encore sur le délai de propagation du signal à travers l'ionosphère (délai ionosphérique). Un exemple de système d'augmentation est le système européen EGNOS qui utilise une pluralité de stations au sol de positions connues, chacune écoutant en permanence les signaux GNSS émis par les satellites et réalisant des mesures sur ces signaux. A partir des mesures effectuées, notamment sur le temps de réception des signaux, un message est transmis aux utilisateurs, via un satellite relai, pour les informer sur l'intégrité du signal de positionnement transmis par les satellites de géolocalisation. Un tel message peut également contenir une correction à appliquer à la mesure réalisée sur le signal GNSS e n vue de déterminer une information de positionnement. Cette correction est par exemple une correction temporelle à appliquer à l'instant mesuré de réception du signal GNSS. L'application de cette correction permettra à l'utilisateur d'améliorer la précision de son positionnement.

Ainsi, un tel système permet d'augmenter la disponibilité du système de positionnement par satellite puisqu'il génère des corrections adaptées permettant d'exploiter le signal GNSS même lorsqu'il est impacté par des erreurs. En pratique cependant, lorsque l'erreur mesurée par les stations sol dépasse un seuil de fonctionnement nominal de la constellation GNSS, défini dans les spécifications du système GNSS, le message transmis indique simplement à l'utilisateur que le satellite de positionnement correspondant est inopérant et qu'il convient d'effectuer son positionnement en utilisant les autres satellites de la constellation, voire un autre moyen de positionnement si la couverture satellitaire n'est plus suffisante.

L'augmentation d'un système GNSS peut également être effectuée par d'autres moyens de transmission que des moyens satellites. En particulier les informations de correction et/ou d'alerte peuvent être transmises par le biais d'un réseau de téléphonie cellulaire dans le cas où le récepteur GNSS comporte également des moyens de réception adaptés à un tel réseau. Un exemple d'un tel système est le système d'assistance pour GPS connu sous l'acronyme A-GPS.

Dans la suite de la description on utilisera le terme augmentation pour désigner tous les systèmes permettant d'améliorer la disponibilité et la fiabilité d'un système de positionnement par satellites, que ces systèmes utilisent des moyens de transmission par satellite ou plus généralement des moyens de transmission par voie radio ou cellulaire.

L'augmentation a ainsi deux fonctions : d'une part prévenir l'utilisateur d'un problème de fonctionnement d'un satellite du système GNSS pour qu'il ne l'utilise pas, et d'autre part fournir à l'utilisateur des corrections lui permettant d'améliorer les mesures réalisées sur un satellite du système GNSS dans son domaine de fonctionnement.

On connait par ailleurs le document « Galileo Orbitography and synchronization processing facility (OSPF) : preliminary design, Martin J R et al ». Il décrit un système OSPF (Orbit and Synchronization processing facility) comme faisant partie du segment sol d'un système GNSS de type Galileo. Ce document ne décrit cependant pas de modèle de comportement intégrant des paramètres tels qu' un modèle de distorsion de la fonction de corrélation entre le signal transmis par ledit satellite de navigation et une réplique parfaite du code d'étalement dudit signal, ou un modèle de distorsion des bribes de code transmises par ledit satellite de navigation audit récepteur, ou un modèle de distorsion de la phase du signal transmise par ledit satellite de navigation audit récepteur.

On connait également la demande de brevet américaine US 2010/164800 qui concerne une méthode de génération et de compression de données relatives à l'orbite d'un satellite. Ce document ne décrit pas d'indicateur de l'écart entre un modèle de comportement d'un satellite (par exemple un modèle relatif à l'orbite du satellite) et le comportement réel du satellite, l'objectif de la méthode décrite étant principalement de fournir une méthode de compression de données adaptée à réduire la taille des éphémérides transmis par un satellite de géolocalisation sur la voie descendante.

On connait également les demandes de brevet américaines US 2004/088111 et US 2010/145616 qui portent sur un système hybride d'augmentation basé sur la combinaison d'un système GBAS (données d'augmentation diffusées par des moyens de communication terrestres) et d'un système SBAS (données d'augmentation diffusées par des moyens satellitaires) d'une part et une méthode d'estimation de modèles d'orbites long terme utilisés comme données d'augmentation par les systèmes GNSS d'autre part. Ces documents divulguent l'utilisation de modèles de comportements mais pas de modèles qui intègrent des paramètres tels qu' un modèle de distorsion de la fonction de corrélation entre le signal transmis par ledit satellite de navigation et une réplique parfaite du code d'étalement dudit signal, ou un modèle de distorsion des bribes de code transmises par ledit satellite de navigation audit récepteur, ou un modèle de distorsion de la phase du signal transmise par ledit satellite de navigation audit récepteur.

L'invention a notamment pour objectif de pallier aux limitations des systèmes d'augmentation et d'assistance existants en permettant d'augmenter d'avantage la disponibilité et les performances des systèmes de positionnement par satellite. En particulier si le signal GNSS transmis par un satellite de géolocalisation et reçu par un récepteur est modifié de telle sorte qu'il n'est plus conforme aux spécifications du système GNSS, la présente invention a pour but d'éviter l'indisponibilité dudit satellite et de maintenir son utilisation pour le calcul de positionnement du récepteur.

Cet objectif est notamment atteint en permettant à l'utilisateur d'exploiter des métriques d'assistance ou d'augmentation même dans le cas où un satellite présente un fonctionnement différent de son fonctionnement nominal.

L'invention a pour objet un système d'augmentation des performances d'un système de géolocalisation par satellite composé d'au moins un satellite et d'au moins un récepteur de positionnement et défini par un domaine de fonctionnement nominal, ledit système d'augmentation comportant au moins un système de mesures des signaux émis par ledit système de géolocalisation, un centre de traitement recevant les mesures transmises par le système de mesures et produisant des messages de correction d'anomalies ou d'alerte sur l'indisponibilité dudit système de géolocalisation à destination desdits récepteurs, des moyens de diffusion terrestres ou satellitaires desdits messages de correction ou d'alerte vers lesdits récepteurs, ledit système d'augmentation étant caractérisé en ce que les messages de correction ou d'alerte contiennent au moins :

    o un modèle de comportement d'au moins un des satellites dudit système de géolocalisation intégrant de nouveaux paramètres permettant d'augmenter le domaine de fonctionnement dudit système et

    o un indicateur de l'écart entre ledit modèle et le comportement réel dudit satellite de géolocalisation, de façon à permettre au récepteur de continuer à utiliser ledit satellite de géolocalisation pour déterminer sa position, à l'aide du modèle de comportement, et en dehors du domaine de fonctionnement nominal du système de géolocalisation,

    o lesdits paramètres du modèle de comportement étant constitués au moins de:

        ■ un modèle de distorsion des bribes de code transmises par ledit satellite de navigation audit récepteur, ou

        ■ un modèle de distorsion de la phase du signal transmise par ledit satellite de navigation audit récepteur.

Dans une variante de réalisation de l'invention, les modèles de distorsion sont obtenus par une décomposition en série de Lagrange, de Fourier, de Tchebychev ou de Taylor de l'écart entre la forme nominale du signal et la forme réelle du signal.

Dans une variante de réalisation de l'invention, lesdits récepteurs de positionnement sont adaptés à corriger les mesures de positionnement effectuées sur les signaux reçus par lesdits satellites de géolocalisation, lesdites corrections étant déterminées à partir du modèle de comportement et/ou de l'indicateur.

Dans une variante de réalisation de l'invention, l'indicateur correspond à une information de statut de la disponibilité du système de géolocalisation.

Dans une variante de réalisation de l'invention, l'indicateur correspond à une information de qualité et/ou de fiabilité dudit satellite de géolocalisation.

Dans une variante de réalisation de l'invention, le modèle de comportement est constitué d'éphémérides desdits satellites de navigation.

Dans une variante de réalisation de l'invention, le modèle de comportement est identique au modèle comportemental usuel du système de géolocalisation mais utilise des périodes de rafraichissement plus courtes.

L'invention a également pour objet un récepteur de positionnement par satellite comportant des moyens pour recevoir une pluralité de signaux de géolocalisation transmis par une pluralité de satellites d'un système de géolocalisation caractérisé en ce qu'il comporte en outre des moyens adaptés à recevoir des messages de correction et/ou d'alerte générés par le système d'augmentation selon l'invention et des moyens adaptés à prendre en compte les indicateurs contenus dans lesdits messages pour déterminer quels satellites dudit système de géolocalisation sont disponibles et/ou pour corriger son positionnement.

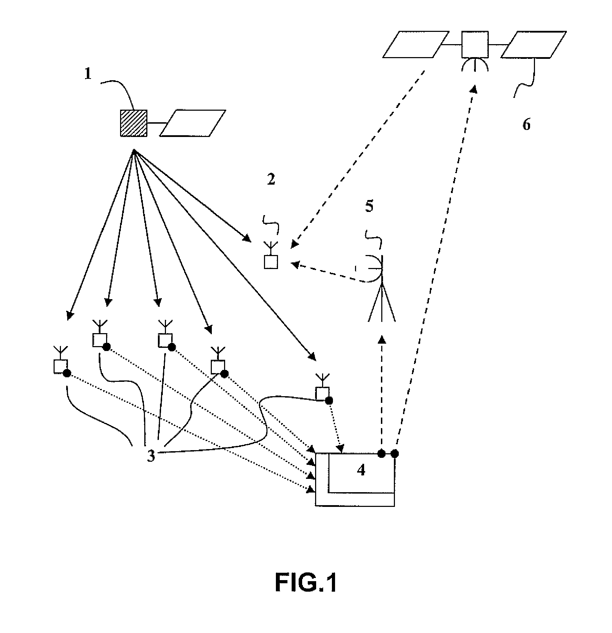

D'autres caractéristiques et avantages de l'invention apparaîtront à l'aide de la description qui suit faite en regard de l'unique figure 1, un schéma du système selon l'invention.

Le signal GNSS émis par un satellite de géolocalisation en direction d'un récepteur de positionnement doit être conforme à un certain nombre de spécifications pour que ce récepteur identifie et utilise ce signal pour calculer sa position. Dans divers cas de figures, ce signal n'est plus conforme aux spécifications du système de positionnement. Le récepteur est alors averti, par le biais d'un système d'assistance, de cette non-conformité et doit ensuite effectuer une nouvelle recherche sur un autre satellite opérationnel pour pouvoir déterminer son positionnement, voire avoir recours à un autre système de positionnement. Des exemples de tels cas de figures sont maintenant décrits.

Un cas classique d'indisponibilité du système de positionnement par satellite concerne le cas d'une manoeuvre d'orbite. Dans un tel cas, le satellite continue à émettre mais doit prévenir le récepteur qu'il est inutilisable par l'envoi d'un message contenant son statut (utilisable ou non). Pendant son fonctionnement nominal, le satellite de géolocalisation transmet périodiquement au récepteur des éphémérides permettant de déterminer sa position pendant une durée de temps donnée, typiquement de l'ordre de deux heures. Pendant cette durée, la position du satellite peut être déterminée à partir des éphémérides et du modèle de variation de la position du satellite sur son orbite établi d'après ses paramètres orbitaux. Pendant une manoeuvre, le satellite effectue des déplacements qui ne correspondent plus à ce modèle. Le récepteur ne peut donc plus déterminer la position exacte du satellite nécessaire au calcul de son positionnement. Pour pallier ce problème, il est nécessaire de fournir au récepteur des éphémérides valables pendant une durée plus courte, par exemple dix minutes, et de mettre à jour ces éphémérides à un rythme plus rapide que dans le cas nominal. Dans le cas où la date de la manoeuvre est connue, il est possible de fournir également une structure unique contenant l'éphéméride avant la manoeuvre, l'éphéméride pendant la manoeuvre et l'éphéméride après la manoeuvre, ainsi que les informations de date de validité et de précision associées. Une autre anomalie impactant le système de positionnement par satellite concerne les sauts d'horloge à bord du satellite. Des phénomènes de saut d'horloge, sensiblement périodiques, impactent l'horloge atomique ce qui peut provoquer des erreurs sur la datation du signal. Lorsqu'un saut d'horloge se produit, le satellite doit transmettre une alerte au récepteur l'informant de son indisponibilité pendant une période de temps donnée qui correspond au temps nécessaire à l'horloge pour qu'elle se stabilise. Pour déterminer son positionnement, le récepteur effectue notamment une estimation de la dérive temporelle entre l'horloge atomique à bord du satellite et son horloge interne. Cette estimation est extrapolée sur une période de temps donnée selon un modèle, le plus souvent une droite ou une parabole, à partir d'un point de mesure. Après un saut d'horloge, le modèle utilisé par le récepteur n'est plus valable car la dérive de l'horloge atomique est modifiée. Pour pouvoir continuer à exploiter le signal émis par le satellite après un saut d'horloge, il est nécessaire de fournir au récepteur un modèle correct de la variation de la dérive d'horloge. Par exemple, un tel modèle peut prendre la forme de deux segments de droite et d'une date de séparation de la validité de chacune de ces droites. Tout autre modèle permettant de déterminer, avec une précision donnée, la variation temporelle de la dérive d'horloge est compatible de l'invention.

Un troisième cas d'indisponibilité du système GNSS concerne les déformations de la structure du signal émis par un satellite de géolocalisation. Cela est notamment le cas lorsque l'émetteur à bord du satellite présente des imperfections. Ces déformations peuvent prendre la forme d'ondulations, connues sous le terme anglais « ripple » ou impacter l'indice de modulation du signal, c'est-à-dire l'amplitude de la variation d'un bit. Ces déformations peuvent également engendrer une variation des temps de montée et de descente des bits, ce qui apparait, pour le récepteur, comme une instabilité du rythme bit. Ces variations peuvent être statiques sur tous les chips successifs, ou uniquement statiques sur tous les bits d'un même chip, ou variables d'un bit à l'autre.

Un signal GNSS déformé ou plus généralement souffrant d'anomalies qui le rendent non conformes aux spécifications du système est communément désigné par le terme anglo-saxon « evil waveform ». Un tel signal n'est pas exploitable en tant que tel mais peut le devenir si des corrections adaptées sont fournies au récepteur.

Afin d'augmenter la disponibilité d'un système de positionnement par satellite, la présente invention vise notamment à fournir des moyens au récepteur pour corriger les imperfections du signal ou les anomalies impactant les mesures des informations de positionnement. Ces moyens prennent notamment la forme de modèles permettant d'estimer les paramètres nécessaires au calcul du positionnement du récepteur même lorsque le signal n'est plus conforme aux spécifications et que le satellite de géolocalisation n'est donc pas en fonctionnement nominal.

La figure 1 représente un schéma du système d'assistance à la localisation d'un équipement selon l'invention. Un système de géolocalisation 1 comportant plusieurs satellites transmet vers le sol un signal de navigation qui est reçu d'une part par un récepteur 2 de positionnement et d'autre part par un système 3 de mesure. Un tel système de mesure est constitué de plusieurs stations terrestres chargées d'effectuer des mesures sur le signal de positionnement dans le but de détecter des erreurs ou anomalies engendrant une non-conformité aux spécifications. Les mesures effectuées sont transmises à un centre de traitement 4 qui détermine des corrections à appliquer aux informations de positionnement et/ou des alertes et les transmet au récepteur 2 par des moyens de transmission radio ou cellulaire 5 ou des moyens de transmission par satellite 6. Le récepteur reçoit ces corrections et les prend en compte pour déterminer son positionnement. Lorsque le signal transmis est défaillant ou que l'un des satellites de géolocalisation 1 est inopérant, notamment pour les raisons précitées, un message d'alerte est transmis au récepteur 2 pour lui indiquer que ce satellite 1 est indisponible. Dans un tel cas, il doit effectuer une nouvelle recherche d'un autre satellite de géolocalisation, voire si nécessaire recourir à un autre système de géolocalisation. Grâce au système selon l'invention, le récepteur 2 reçoit un message, envoyé par le centre de traitement 4, contenant des modèles de comportement des satellites, par exemple des éphémérides, ainsi qu'un indicateur donnant l'écart entre le modèle et le comportement réel du satellite. Le récepteur 2 peut alors déterminer quels satellites sont disponibles à partir des informations contenues dans le message transmis par le centre de traitement 4. Le récepteur 2 peut également corriger les mesures de positionnement qu'il a effectuées à partir des corrections reçues. On désigne par le terme système d'augmentation l'ensemble constitué des récepteurs de mesure 3, du centre de traitement 4 et des moyens de transmission 5,6.

Les corrections déterminées par le centre de traitement 4 sont de plusieurs types.

Dans le cas où une erreur impacte la position du satellite de géolocalisation 1, par exemple au cours d'une manoeuvre du satellite, les corrections adaptées sont déterminées à partir d'éphémérides à validité courte, ou d'éphémérides complétées par des paramètres orbitaux supplémentaires. Par exemple, le modèle d'éphémérides d'un satellite permet son positionnement avec une précision de un mètre. Si un satellite effectue une manoeuvre d'orbite, plusieurs exemples de modélisation de son comportement au cours de cette manoeuvre sont envisageables. Le premier exemple de modélisation (A) consiste à conserver le modèle d'éphémérides classique avec la même période de validité de deux heures, dans ce cas, la précision du positionnement du satellite sera de l'ordre de quelques kilomètres. Le deuxième exemple de modélisation (B) consiste à conserver le modèle d'éphémérides classique avec une période de validité d'une minute pour que la précision du positionnement du satellite reste de un mètre. Un troisième exemple de modélisation (C) consiste à conserver le modèle d'éphémérides classique avec une période de validité de quinze minutes pour que la précision du positionnement du satellite soit en moyenne de l'ordre de dix mètres.

Un autre exemple de modélisation (D) consiste en la fourniture de trois modèles d'éphémérides classiques, valables respectivement avant, pendant et après la mesure, et associés aux dates de début et de fin de manoeuvre.

Un dernier exemple de modélisation (E) consiste en la fourniture d'éphémérides initiales, puis les caractéristiques de la manoeuvre, par exemple la date, la direction et l'amplitude de poussée, ainsi éventuellement que le modèle d'éphéméride classique après la manoeuvre.

La solution (B) est la solution optimale, mais elle implique la diffusion de volumes de données d'assistance beaucoup plus importants. Dans les cas des solutions (A) et (C), dans la mesure où la performance du système de positionnement est dégradée par rapport à son fonctionnement nominal, un système d'augmentation classique devrait déclarer ce satellite inutilisable. Cependant, dans le cas (C), on voit que l'erreur commise ne perturbe en moyenne que faiblement le positionnement, ce qui est acceptable par la plupart des applications, et que de plus cette erreur étant une erreur moyenne, il arrive qu'elle soit bien moindre. La solution (E) est avantageuse en termes de volume de données, mais elle implique un plus grand nombre de calculs pour le récepteur.

D'autres types d'erreurs impactant le signal de radionavigation sont modélisables et corrigeables grâce au système d'augmentation selon l'invention. Dans le cas où l'erreur impacte directement le signal transmis (cas des «evil waveform» précédemment mentionnées), des modèles permettant de corriger le biais et l'ondulation de la phase du signal sont fournis.

Dans le premier cas, les modèles consistent en un ensemble de paramètres permettant de caractériser la forme de la distorsion de phase du signal, c'est-à-dire l'écart entre la phase du signal effectivement reçue et la phase nominale, c'est-à-dire du signal attendu. Cette caractérisation peut être obtenue, selon la précision voulue, par des modèles adaptés, basés par exemple sur des décompositions de Lagrange, de Fourier, de Taylor ou de Tchebychev. A partir de ces informations, le récepteur peut corriger la phase des répliques de signal GNSS qu'il génère pour effectuer la corrélation entre le signal reçu et la réplique locale, qui constitue la base de la procédure de localisation GNSS. De façon analogue, le code d'étalement du signal peut aussi être corrigé à partir de modèles similaires.

Dans une variante, les modèles transmis au récepteur contiennent directement la réplique du signal à appliquer, ou l'écart entre la réplique à appliquer et la réplique nominale, sous la forme d'un signal échantillonné réel ou complexe. Cette variante entraine un plus grand volume de données à transmettre, mais elle permet de garantir une précision fixe quelle que soit la déformation observée du signal, alors que pour la première solution la précision dépend de la déformation et de l'ordre de décomposition considéré, de sorte que précision, déformation et volume de données sont liés.

Le système selon l'invention permet également d'exploiter des modèles de distorsion des bribes de code transmises par le satellite de navigation au récepteur ou des modèles de distorsion de la phase du signal transmis par le satellite de navigation au récepteur suivant les mêmes modèles que ceux décrits ci-dessus pour la phase du signal, c'est-à-dire soit des modèles de distorsion, soit une réplique ou une correction de réplique brute.

Les modèles permettant de corriger les erreurs de type « evil waveforme» décrits ci-dessus sont fournis aux récepteurs de radionavigation selon les mêmes scénarios que ceux décrits pour les erreurs liées aux manoeuvres du satellite.

Précisément, ces modèles peuvent être fournis avec une période de rafraîchissement fixe, en privilégiant soit un faible volume de données au détriment de la précision avec une période élevée, soit une grande précision avec une période courte mais un plus grand volume de données.

Alternativement, la fourniture des modèles peut être faite avec une période de validité spécifiée.

Alternativement, des modèles de correction non génériques peuvent être transmis au récepteur qui les exploite pour les transformer en modèles génériques.

Plus précisément on note X(i) le modèle de correction fourni au récepteur à un instant donné et valable pendant une période de temps i spécifiée. Ce modèle X change d'une période de validité (i) à la période suivante (i+1). Le système selon l'invention peut fournir la liste des modèles X(i) pour chaque nouvelle période i.

Le système selon l'invention peut également fournir le modèle X(0) valable pendant la première période initiale puis la liste des écarts V(i) = X(i) - X(i-1) entre le modèle valable pour la période i-1 et celui valable pour la période i de sorte que le récepteur peut retrouver les valeurs du modèle X(i) pendant la période i en ajoutant l'écart V(i) fourni au modèle valide pendant la période précédente i-1 :

$$X(i) = X(i-1) + V(i).$$

Dans une variante, le système selon l'invention peut aussi produire un modèle plus général, par exemple un modèle parabolique défini par les trois paramètres (Y0, Y1, Y2), de sorte que le récepteur retrouve les valeurs du modèle X(i) pendant la période i à l'aide d'une interpolation parabolique donnée par exemple par la formule

$$X(i) = Y0 + i * Y1 + i^2 * Y2.$$

En plus des corrections adaptées, le centre de contrôle 4 peut fournir une note de qualité et de fiabilité du ou des modèles de corrections fournies. En indiquant dans le message transmis par le système d'augmentation une note de qualité de modélisation plutôt qu'un statut sur la disponibilité des satellites, cela permet à l'utilisateur de déterminer s'il peut ou non utiliser le satellite, en fonction de la criticité de son application et des solutions alternatives dont il dispose (autre satellite disponible, autre moyen de positionnement, ...).

La présente invention présente l'avantage principal d'augmenter significativement la disponibilité d'un système de géolocalisation par satellite. En effet, les modèles selon l'invention peuvent-être appliqués indifféremment dans le cas où le domaine de fonctionnement du satellite GNSS est encore dans les tolérances spécifiées (domaine nominal) et dans le cas où le domaine de fonctionnement du satellite GNSS est sorti des tolérances spécifiées.

Les systèmes d'augmentation connus permettent de limiter le domaine d'utilisation d'un système de géolocalisation à son domaine nominal. Plus précisément, ils permettent de limiter l'exploitation de signaux de radionavigation GNSS par un récepteur aux cas nominaux, c'est-à-dire conformes aux spécifications du système. Ainsi, un système d'augmentation permet d'empêcher l'utilisation de signaux de radionavigation non conformes, car entachés d'erreurs dont les causes sont diverses, ce qui conduirait à produire des informations de géolocalisation incorrectes. Dans certains cas, les systèmes d'augmentation restreignent même le domaine nominal à un sous domaine car des fausses alarmes, c'est-à-dire des cas où le système d'augmentation estime que le signal de radionavigation n'est pas conforme aux spécifications alors qu'en réalité il l'est, peuvent intervenir. Le domaine nominal est également restreint car des périodes de sauvegarde existent avant et après chaque événement source d'indisponibilité d'un satellite, par exemple avant et après chaque manoeuvre du satellite. Pendant ces périodes de sauvegarde, un système d'augmentation connu détecte une indisponibilité du système GNSS alors qu'en réalité il ne l'est pas. En résumé, les systèmes d'augmentation connus ont pour objectif premier de garantir que le système de positionnement GNSS fonctionne dans son domaine nominal, c'est-à-dire conformément à ses spécifications. On parle alors de système de positionnement augmenté pour désigner l'ensemble composé du système de positionnement par satellite et du système d'augmentation.

Au contraire des systèmes d'augmentation connus, le système selon l'invention permet de maintenir le système de positionnement par satellite augmenté disponible tant que le système d'augmentation lui-même est disponible et tant que les écarts du système de positionnement à son fonctionnement nominal sont modélisables. Un avantage important du système d'augmentation selon l'invention est de garantir que le système de positionnement par satellite est exploitable dans le domaine de fonctionnement modélisé par le système d'augmentation selon l'invention, ce domaine de fonctionnement modélisé par le système d'augmentation étant supérieur au domaine de fonctionnement nominal du système GNSS.

**Revendications**

1. Système d'augmentation des performances d'un système de géolocalisation (1) par satellite composé d'au moins un satellite et d'au moins un récepteur (2) de positionnement et défini par un domaine de fonctionnement nominal, ledit système d'augmentation comportant au moins un système de mesures (3) des signaux émis par ledit système de géolocalisation, un centre de traitement (4) recevant les mesures transmises par te système de mesures (3) et produisant des messages de correction d'anomalies ou d'alerte sur l'indisponibilité dudit système de géolocalisation à destination desdits récepteurs (2), des moyens de diffusion terrestres (5) ou satellitaires (6) desdits messages de correction ou d'alerte vers lesdits récepteurs (2), ledit système d'augmentation étant **caractérisé en ce que** les messages de correction ou d'alerte contiennent au moins :

   o un modèle de comportement (X) d'au moins un des satellites dudit système de géolocalisation (1) intégrant de nouveaux paramètres permettant d'augmenter le domaine de fonctionnement dudit système (1) et

o un indicateur de l'écart entre ledit modèle et le comportement réel dudit satellite de géolocalisation, de façon à permettre au récepteur (2) de continuer à utiliser ledit satellite de géolocalisation pour déterminer sa position, à l'aide du modèle de comportement, et en dehors du domaine de fonctionnement nominal du système de géolocalisation (1),

o lesdits paramètres du modèle de comportement étant constitués au moins de:

■ un modèle de distorsion des bribes de code transmises par ledit satellite de navigation audit récepteur (2), ou

■ un modèle de distorsion de la phase du signal transmise par ledit satellite de navigation audit récepteur (2).

2. Système selon la revendication 1 **caractérisé en ce que** les modèles de distorsion sont obtenus par une décomposition en série de Lagrange, de Fourier, de Tchebychev ou de Taylor de l'écart entre la forme nominale du signal et la forme réelle du signal.

3. Système selon l'une des revendications précédentes **caractérisé en ce que** lesdits récepteurs (2) de positionnement sont adaptés à corriger les mesures de positionnement effectuées sur les signaux reçus par lesdits satellites de géolocalisation, lesdites corrections étant déterminées à partir du modèle de comportement et/ou de l'indicateur.

4. Système selon l'une des revendications précédentes **caractérisé en ce que** l'indicateur correspond à une information de statut de la disponibilité du système de géolocalisation (1).

5. Système selon l'une des revendications 1, 2 ou 3 **caractérisé en ce que** l'indicateur correspond à une information de qualité et/ou de fiabilité dudit satellite de géolocalisation.

6. Système selon l'une des revendications précédentes **caractérisé en ce que** le modèle de comportement (X) est constitué d'éphémérides desdits satellites de navigation.

7. Système selon l'une des revendications précédentes **caractérisé en ce que** le modèle de comportement (X) est identique au modèle comportemental usuel du système de géolocalisation (1) mais utilise des périodes de rafraichissement plus courtes.

8. Récepteur (2) de positionnement par satellite comportant des moyens pour recevoir une pluralité de signaux de géolocalisation transmis par une pluralité de satellites d'un système de géolocalisation. (1) **ca-**

**ractérisé en ce qu'**il comporte en outre des moyens adaptés à recevoir des messages de correction et/ou d'alerte générés par le système d'augmentation selon l'une des revendications 1 à 7 et des moyens adaptés à prendre en compte les indicateurs contenus dans lesdits messages pour déterminer quels satellites dudit système de géolocalisation (1) sont disponibles et/ou pour corriger son positionnement.

## Patentansprüche

1. System zum Erhöhen der Leistungen eines satellitenbasierten Ortsbestimmungssystems (1), bestehend aus wenigstens einem Satelliten und wenigstens einem Positionsempfänger (2) und definiert durch einen theoretischen Funktionsbereich, wobei das Erhöhungssystem Folgendes umfasst: wenigstens ein System (3) zum Messen von von dem Ortsbestimmungssystem emittierten Signalen, eine Verarbeitungsanlage (4), die die von dem Messsystem (3) gesendeten Messwerte empfängt und Anomaliekorrektur- oder Alarmmeldungen über die Nichtverfügbarkeit des Ortsbestimmungssystems mit Ziel zu den Empfängern (2) erzeugt, terrestrische (5) oder satellitengetützte (6) Mittel zum Verteilen der Korrektur- oder Alarmmeldungen zu den Empfängern (2), wobei das Erhöhungssystem **dadurch gekennzeichnet ist, dass** die Komektur- oder Alarmmeldungen wenigstens Folgendes enthalten:

o ein Modell (X) über das Verhalten von wenigstens einem der Satelliten des Ortsbestimmungssystems (1), das neue Parameter beinhaltet, die eine Vergrößerung des Funktionsbereichs des Systems (1) zulassen, und

o einen Indikator der Abweichung zwischen dem Modell und dem tatsächlichen Verhalten des Ortsbestimmungssatelliten, um es zuzulassen, dass der Empfänger (2) den Ortsbestimmungssatelliten zum Bestimmen seiner Position weiterbenutzen kann, mit Hilfe des Verhaltensmodells, und außerhalb des theoretischen Funktionsbereichs des Ortsbestimmungssystems (1),

o wobei die Parameter des Verhaltensmodells wenigstens von den folgenden Elementen gebildet werden:

■ einem Modell von Verzerrungen von Code-Schnipseln, die von dem Navigationssatelliten zu dem Empfänger (2) gesendet werden, oder

■ einem Modell von Verzerrungen der Phase des Signals, das von dem Navigationssatelliten zu dem Empfänger (2) gesendet wird.

**2.** System nach Anspruch 1, **dadurch gekennzeichnet, dass** die Verzerrungsmodelle durch eine serielle Lagrange-, Fourier-, Tschebyschow- oder Taylor-Zerlegung der Abweichung zwischen der theoretischen Form des Signals und der tatsächlichen Form des Signals erhalten werden.

**3.** System nach einem der vorherigen Ansprüche, **dadurch gekennzeichnet, dass** die Positionsempfänger (2) so ausgelegt sind, dass sie die an den von den Ortsbestimmungssatelliten empfangenen Signalen vorgenommenen Positionsmessungen korrigieren, wobei die Korrekturen auf der Basis des Verhaltensmodells und/oder des Indikators bestimmt werden.

**4.** System nach einem der vorherigen Ansprüche, **dadurch gekennzeichnet, dass** der Indikator einer Statusinformation über die Verfügbarkeit des Ortsbestimmungssystems (1) entspricht.

**5.** System nach Anspruch 1, 2 oder 3, **dadurch gekennzeichnet, dass** der Indikator einer Qualitäts- und/oder Zuverlässigkeitsinformation des Ortsbestimmungssatelliten entspricht.

**6.** System nach einem der vorherigen Ansprüche, **dadurch gekennzeichnet, dass** das Verhaltensmodell (X) von Ephemeriden der Navigationssatelliten gebildet wird.

**7.** System nach einem der vorherigen Ansprüche, **dadurch gekennzeichnet, dass** das Verhaltensmodell (X) mit dem gewöhnlichen Verhaltensmodell des Ortsbestimmungssystems (1) identisch ist, aber kürzere Auffrischungsperioden benutzt.

**8.** Satellitengestützter Positionsempfänger (2), der Mittel zum Empfangen von mehreren, von mehreren Satelliten eines Ortsbestimmungssystems (1) gesendeten Ortsbestimmungssignalen umfasst, **dadurch gekennzeichnet, dass** er darüber hinaus Mittel umfasst, die zum Empfangen von Korrektur- und/oder Alarmnachrichten ausgelegt sind, erzeugt durch das Erhöhungssystem nach einem der Ansprüche 1 bis 7, und Mittel, die so ausgelegt sind, dass sie die in den Nachrichten enthaltenen Indikatoren berücksichtigen, zum Bestimmen, welche Satelliten des Ortsbestimmungssystems (1) verfügbar sind, und/oder zum Korrigieren seiner Position.

**Claims**

**1.** A system for enhancing the performance of a satellite geolocation system (1) made up of at least one satellite and at least one positioning receiver (2) and defined by a nominal operating range, said enhancement system comprising at least one system (3) for measuring signals transmitted by said geolocation system, a processing centre (4) receiving the measurements transmitted by said measurement system (3) and producing anomaly correction or alert messages concerning the unavailability of said geolocation system that are intended for said receivers (2), land-based (5) or satellite-based (6) means for broadcasting said correction or alert messages to said receivers (2), said enhancement system being **characterised in that** said correction or alert messages contain at least:

    o one behaviour model (X) of at least one of the satellites of said geolocation system (1) integrating new parameters allowing the operating range of said system (1) to be enhanced; and
    o an indicator of the deviation between said model and the actual behaviour of said geolocation satellite, so as to allow said receiver (2) to continue to use said geolocation satellite in order to determine its position, using said behaviour model and outside of the nominal operating range of said geolocation system (1);
    o said parameters of said behaviour model being made up of at least:

        ■ one model for distorting code snippets transmitted by said navigation satellite to said receiver (2); or
        ■ one model for distorting the phase of the signal transmitted by said navigation satellite to said receiver (2).

**2.** The system according to claim 1, **characterised in that** the distortion models are obtained by a Lagrange, Fourier, Chebyshev or Taylor series decomposition of the deviation between the nominal form of the signal and the actual form of the signal.

**3.** The system according to any one of the preceding claims, **characterised in that** said positioning receivers (2) are adapted to correct the positioning measurements carried out on the signals received by said geolocation satellites, said corrections being determined on the basis of said behaviour model and/or of said indicator.

**4.** The system according to any one of the preceding claims, **characterised in that** said indicator corresponds to an item of information relating to the availability status of said geolocation system (1).

**5.** The system according to any one of claims 1, 2 or 3, **characterised in that** said indicator corresponds to an item of quality and/or reliability information of said geolocation satellite.

6. The system according to any one of the preceding claims, **characterised in that** said behaviour model (X) is made up of ephemerides of said navigation satellites.

7. The system according to any one of the preceding claims, **characterised in that** said behaviour model (X) is identical to the normal behaviour model of said geolocation system (1), but uses shorter refresh periods.

8. A satellite positioning receiver (2) comprising means for receiving a plurality of geolocation signals transmitted by a plurality of satellites of a geolocation system (1), **characterised in that** it further comprises means adapted to receive correction and/or alert messages generated by the enhancement system according to any one of claims 1 to 7 and means adapted to take into account the indicators contained in said messages in order to determine which satellites of said geolocation system (1) are available and/or to correct its position.

# FIG.1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010164800 A
- US 2004088111 A

- US 2010145616 A

**Littérature non-brevet citée dans la description**

- **MARTIN J R.** *Galileo Orbitography and synchronization processing facility (OSPF) : preliminary design*